# EUROPÄISCHE PATENTSCHRIFT

(11) **EP 1 027 234 B1**
(45) Veröffentlichungstag und Bekanntmachung des Hinweises auf die Patenterteilung: **17.07.2002**
(21) Anmeldenummer: 98959827.1
(22) Anmeldetag: 03.11.1998
(51) Int. Cl.: B60S 1/08

(54) **STEUEREINRICHTUNG FÜR EINE SCHEIBENWISCHEREINRICHTUNG UND VERFAHREN ZU DEREN BETRIEB**
CONTROL DEVICE FOR A WINDSCREEN WIPER SYSTEM AND METHOD FOR OPERATING THE SAME
SYSTEME DE COMMANDE POUR ESSUIE-GLACE ET PROCEDE DE MISE EN MARCHE D'UN TEL SYSTEME

(30) Priorität: 07.11.1997 DE 19749258
(43) Veröffentlichungstag der Anmeldung: 16.08.2000
(73) Patentinhaber: DaimlerChrysler AG, 70567 Stuttgart (DE)
(72) Erfinder: MÄCKEL, Rainer, D-53639 Königswinter (DE); MAUSER, Roland, D-71640 Ludwigsburg (DE)
(74) Vertreter: Maute, Hans-Jürgen, Dipl.-Ing.
(86) Internationale Anmeldenummer: EP9806940
(87) Internationale Veröffentlichungsnummer: WO9924297

(56) Entgegenhaltungen:
- WO-A-90/03903
- US-A- 5 493 190
- US-A- 5 568 027
- PATENT ABSTRACTS OF JAPAN vol. 017, no. 667 (M-1524), 9. Dezember 1993 & JP 05 221289 A (FUJITSU TEN LTD), 31. August 1993
- PATENT ABSTRACTS OF JAPAN vol. 017, no. 667 (M-1524), 9. Dezember 1993 & JP 05 221290 A (FUJITSU TEN LTD), 31. August 1993

## Beschreibung

Die Erfindung betrifft eine Steuereinrichtung Beziehungsweise ein Verfahren zu deren Betrieb gemäß den Merkmalen der unabhängigen Ansprüche.

In JP-Abstracts-5-221290 (A) ist eine feuchtegesteuerte Scheibenwischereinrichtung gemäß dem Oberbegriff von Anspruch 1 bekannt, bei welcher die Schaltschwelle mittels manuell betätigbarer Steuermittel, nämlich dem Scheibenwischerwählschalter, veränderbar ist. Zwei verschiedene Zähler erfassen, wie oft der Scheibenwischerwählschalter betätigt wird. Der eine Zähler erfaßt die Schaltvorgänge in einen höheren Betriebsmodus, der andere Zähler erfaßt die Schaltvorgänge in einen niederen Betriebsmodus. Ein Auswerteschaltkreis liest den Inhalt der Zähler aus und erhöht oder senkt die Schaltschwelle für die Betätigung des Wischers im Intervallbetrieb. Hierbei bewirkt ein Schaltvorgang in einen höheren Betriebsmodus ein Absenken der Schaltschwelle und damit eine Verkürzung der Pause zwischen zwei Wischvorgängen während ein Schaltvorgang in einen niederen Betriebsmodus ein Anheben der Schaltschwelle und damit eine Verlängerung der Pause zwischen zwei Wischvorgängen bewirkt. Im Intervallbetrieb ermöglicht die Scheibenwischersteuerung eine Anpassung der Wischerintervalle an die individuellen Wünsche des Benutzers.

Aus der Patentschrift US 5,568,027 ist dem Oberbegriff des Anspruchs 1 entsprechend eine Steuereinrichtung für den Antriebsmotor einer Scheibenwischereinrichtung eines Fahrzeugs, insbesondere eines Kraftfahrzeugs, bekannt mit einer Steuerschaltung, die mittels eines manuell zu betätigenden Wischerschalters aktivierbar ist und die den Antriebsmotor in einer Schaltstufe des Wischerschalters entsprechend einer Kennlinie abhängig von einem Signal eines Regensensors automatisch steuert. Die Scheibenwischersteuerung vermeidet abrupte Übergänge in der Wischerbewegung indem sie mit einem Glättungsalgorithmus kurzeitige, der statistischen Streuung unterliegende Signale des Regensensors mit dem Langzeitsignalverhalten des Regensensors vergleicht und durch Mittelwertbildung des Langzeitverhaltens des Regensensors mit dem Kurzzeitverhalten des Regensensors eine Glättung erzielt. Außerdem wird im Intervallbetrieb die Wischersteuerung dem logarithmischen Wahrnehmungsvermögen eines Menschen angepaßt. Hierzu wird in einem Mikrocomputer der Logarithmus aus dem Zählwert des Regensensors gebildet. Diese logarithmisierte Regenintensität wird als Zahlenwert für weitere Berechnungsvorgänge im Glättungsalgorithmus benötigt. Der Fahrer hat im Intervallbetrieb die Möglichkeit den Wert der logarithmisierten Regenintensität durch Auswahl einer Sensitivitätsvorwahl zu beeinflussen und so die Intervallsteuerung in geringem Umfang an sein persönliches Empfinden anzupassen. Ein Kennlinienbetrieb ist jedoch aus der US 5,568,027 nicht bekannt, da jeweils alle 0.3 Sekunden der Wert für die logarithmisierte Regenintensität neu berechnet wird. Abhängig von der vom Regensensor detektierten, auf die zu wischende Scheibe auftreffenden Regenmenge wird dabei die Pausenzeit zwischen jedem Wischzyklus mit zunehmender Regenmenge vermindert. Unterschreitet die Pausenzeit einen vorgegebenen Wert, wird der Antriebsmotor in einen kontinuierlichen Dauerbetrieb umgeschaltet, wobei seine Drehzahl zunächst bei einem minimalen Wert liegt und mit weiter zunehmender Regenmenge bis zu einer Höchstdrehzahl mit entsprechend gesteigerter Wischzyklenzahl je Zeiteinheit hochgesteuert wird.

Der Erfindung liegt die Aufgabe zugrunde, bei einer Steuereinrichtung gemäß dem Oberbegriff des ersten Anspruchs Maßnahmen zu treffen, durch welche die Wischcharakteristik an die individuellen Wünsche des Benutzers angepaßt werden kann.

Die Lösung der Aufgabe erfolgt gemäß der Erfindung durch die kennzeichnenden Merkmale des Anspruchs 1 beziehungsweise 10. Weitere Ausgestaltungen sind in den zusätzlichen Ansprüchen angegeben.

Bei einer Ausgestaltung einer Steuereinrichtung gemäß der Erfindung wird eine adaptive Wischkennlinie generiert, die mittels manuell betätigbarer Steuermittel verändert wird, wenn sie nicht den individuellen Bedürfnissen des Kraftfahrzeugbenutzers entspricht. Dabei kann bei Intervallbetrieb die Pausenzeit zwischen zwei Wischvorgängen verändert und/oder im anschließenden kontinuierlichen Wischbetrieb die Drehzahl des Antriebsmotors bzw. die Wischfrequenz erhöht oder erniedrigt werden. Hierzu ist vorzugsweise der Wischerschalter mit üblichen drei Schaltstufen ausgestattet, wobei der ersten Schaltstufe der automatische Kennlinienbetrieb zugeordnet ist, während der oder mehreren zusätzlichen Schaltstufe/n eine bzw. mehrere feste Drehzahl/en zugeordnet sind. Die in der Kennlinie werkseitig festgelegten Betriebsdaten für die Steuerung des Antriebsmotors der Scheibenwischereinrichtung sind durchschnittlichen Anforderungen entsprechend programmiert. Nach dem Einschalten des automatischen Kennlinienbetriebs wird dann abhängig von der von einem Regensensor festgestellten Regenmenge je Zeiteinheit selbsttätig bei geringen Regenmengen ein Intervallbetrieb mit großen Pausenzeiten gesteuert, wobei sich die Pausenzeiten mit zunehmender Regenmenge verringern und bei weiter ansteigender Regenmenge der Antriebsmotor in einen kontinuierlichen Betrieb übergeht, wobei dann die Drehzahl bis zu einem Maximalwert erhöht wird, wenn die Regenmenge entsprechend zunimmt.

Wenn die vorgegebene Kennlinie keine den persönlichen Wunschvorstellungen des Fahrers entsprechende Wischcharakterisitik steuert, kann eine Änderung der Kennlinie durch Einschalten der zusätzlichen Schaltstufen des Wischerschalters vorgenommen werden. Wenn dabei beispielsweise die Pausenzeiten im Intervallbetrieb zu lang bzw. die Wischfrequenz im stetigen Betrieb zu gering ist, dann braucht der Wischerschalter lediglich auf eine der weiteren Schaltstufen mit den fest vorgegebenen Drehzahlen umgeschaltet werden. Diese Schaltmaßnahme wird im Steuergerät erfaßt und mittels einer dadurch ausgelösten Anpassungs-Algorithmus-Steuerung die Neigung der Kennlinie vermindert. Dabei bleibt der Endpunkt der Kennlinie im maximalen Betriebspunkt des Antriebsmotors zumindest weitgehend fest. Durch dieses Hochschwenken der Kennlinie um den maximalen Arbeitspunkt werden die der Kennlinie zugeordneten Betriebsdaten für den Antriebsmotor so verändert, daß die Pausenzeiten bei Intervallbetrieb jeweils verkürzt und die Drehzahl des Antriebsmotors bzw. die Wischfrequenz des Scheibenwischers im Kennlinienabschnitt für kontinuierlichen Betrieb angehoben wird. Dabei kann ein Hochschalten des Wischerschalters aus der Schaltstufe 1 in die Schaltstufe 2 eine vorgegebene Änderung hervorrufen, während bei einem Durchschalten von Schaltstufe 1 nach Schaltstufe 3 eine demgegenüber stärkere Anhebung der Kennlinie gesteuert werden kann. Durch mehrmaliges Zurück- zu erneutes Hochschalten des Wischerschalters kann dabei eine stufenweise Anhebung der Kennlinie bzw. die stufenweise Verminderung der Steigung mittels der Algorithmus-Steuerung herbeigeführt werden. Beim Zurückschalten des Wischerschalters in die erste Schaltstufe für automatischen Betrieb wird somit jeweils eine an die Bedürfnisse des Fahrers angenäherte Kennlinie für die regenabhängige Steuerung der Scheibenwischereinrichtung zur Verfügung gestellt.

Wenn dagegen der von der Regenmenge abhängige Arbeitspunkt auf der Kennlinie Betriebsdaten an den Antriebsmotor liefert, die eine für die individuellen Bedürfnisse des Fahrers zu hohe Wischfolge nach sich ziehen, dann ist ein Zurücknehmen der Kennliniendaten in der Weise möglich, daß die Neigung der Kennlinie wieder steiler zunimmt, die Pausenzeiten im Intervallbetrieb im Intervallbetrieb größer werden und die Wischfrequenz im darüberliegenden Kennlinienbereich verlangsamt wird. Hierbei wird davon ausgegangen, daß die aktuelle Kennlinie für den automatischen, regenmengenabhängigen Betrieb in einem Bereich angesteuert wird, der oberhalb der Wischzyklenzahl bzw. Drehzahl des Antriebsmotors liegt, die fest durch die Schaltstellung 2 des Wischerschalters vorgegeben wird. Schaltet demnach der Benutzer des Wischerschalter von der für Automatikbetrieb ausgelegten Schaltstellung 1 auf die Schaltstellung 2 um, dann liegen die durch die Schaltstellung 2 vorgegebenen Betriebsdaten unter den durch den aktuellen Kennlinien vorgegebenen Betriebsdaten. Das daraus gewonnenen Steuersignal bewirkt in der Algorithmus-Steuerung eine Verminderung der Betriebsdaten nicht nur für diesen Arbeitspunkt, sondern über die gesamte Kennlinienmenge. Dabei bleibt wiederum der der größten erfaßten Regenmenge zugeordnete höchste Betriebspunkt der Kennlinie unverändert. Es kann dabei jeweils eine neue Kennlinie bestimmt oder auf eine von mehreren fest vorgegebenen Kennlinien umgeschaltet werden. Zusätzlich kann dann, wenn der Wischerschalter in seine Null-Stellung geschaltet wird und der Regensensor bei laufendem Fahrzeugmotor noch immer eine nennenswerte Regenmenge an die Steuerschaltung signalisiert, aus einem daraus gewonnenen Steuerbefehl die Steigung der Kennlinie vergrößert bzw. deren Verlauf so geändert werden, daß die Pausenzeiten bei Intervallbetrieb vergrößert und die kontinuierlich ablaufenden Wischzyklen im oberen Kennlinienbereich vermindert werden.

Die Erfindung ist nachfolgend anhand von Prinzipdarstellungen näher erläutert. Es zeigen:

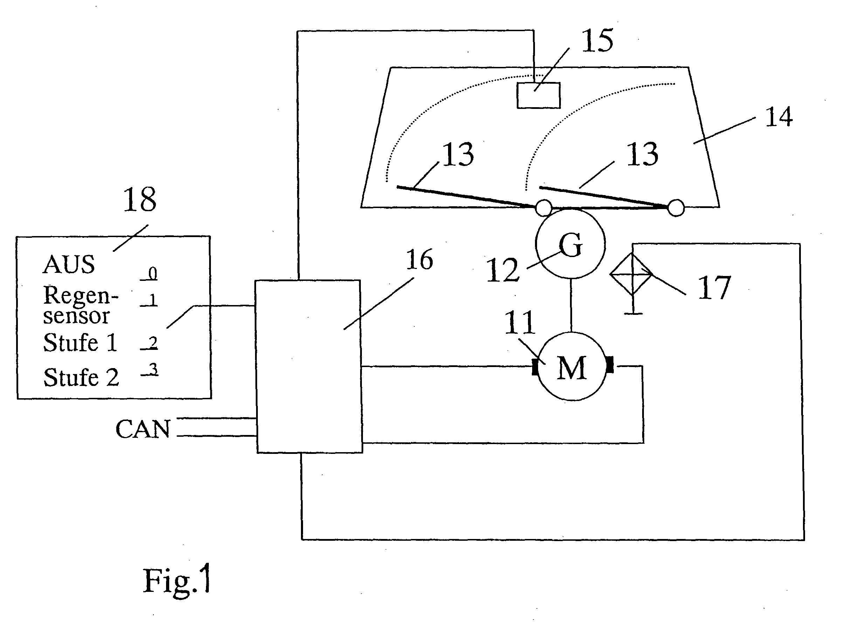

- Fig. 1: eine Schaltungsskizze einer Steuereinrichtung für eine Scheibenwischereinrichtung,
- Fig.2: Prinzipdarstellungen zur Änderung einer der Steuereinrichtung zugeordneten Kennlinie und
- Fig. 3: eine Kennlinie mit unterschiedlichen Arbeitspunkten.

Eine Steuereinrichtung für einen Antriebsmotor 11 prägt mittels eines Getriebes 12 Scheibenwischern 13 hin- und hergehende Wischzyklen auf. Die Scheibenwischer 13 liegen auf einer zu wischenden Scheibe 14 auf, der ein Regensensor 15 zugeordnet ist. Der Regensensor 15 liefert ein elektrisches Steuersignal, das abhängig von der Regenmenge pro Zeiteinheit ist, welche auf dem von ihm überdeckten Scheibenbereich auftrifft. Das von der Regenmenge abhängige Steuersignal wird einer Steuerschaltung 16 zugeführt. Über eine Meßeinheit 17 kann die Steuerschaltung 16 die aktuelle Drehzahl des Scheibenwischermotors 11 und damit die Wischzyklenzahl bestimmen. Zusätzlich ist als Eingabeeinheit noch ein Wischerschalter 18 direkt oder über ein Bus-System an die Steuerschaltung 16 angeschlossen, der üblicherweise als Lenkstockschalter an der Lenksäule des betreffenden Fahrzeugs gehalten ist und der neben einer Stellung Null für die Außerbetriebsetzung des Antriebsmotors 11 weitere zu- und rückschaltbare Schaltstufen 1, 2, 3 für unterschiedliche Betriebszustände aufweist. In einer ersten Schaltstufe 1 wird der Antriebsmotor 11 entsprechend einer Kennlinie 19 gesteuert, die in der Steuerschaltung 16 abgelegt ist und die abhängig von der vom Regensensor 15 ermittelten Regenmenge Betriebsdaten für den Antriebsmotor 11 vorgibt. Gemäß den in der Kennlinie 19 abgelegten Betriebsdaten wird der Antriebsmotor 11 bei einer vom Regensensor 15 erfaßten geringen Regenmenge im Intervallbetrieb betrieben, wobei nach jedem Wischzyklus aus einer hin- und hergehenden Schwenkbewegung für den Scheibenwischer 13 eine Pausenzeit bis zur Ausführung des nächsten Wischzyklus eintritt. Mit zunehmender Regenmenge wird die jeweilige Pausenzeit verkürzt. Sobald die Pausenzeit einen bestimmten Wert unterschreitet, wird durch die Kennlinie 19 bei entsprechend gesteigerter Regenmenge ein Dauerbetrieb des Antriebsmotors 11 bei minderer Drehzahl gesteuert. Bei weiter steigender erfaßter Regenmenge wird auch die Drehzahl des Antriebsmotors 11 zu höheren Werten hin verstellt, bis sie bei großer Regenmenge ihren Maximalwert M erreicht. Bei abnehmender Regenmenge erfolgt die Steuerung des Antriebsmotors 11 in entgegengesetzter Richtung.

Unabhängig vom automatischen, regenmengenabhängigen Steuervorgang kann mittels des Wischerschalters 18 durch Umschalten in die zweite Schaltstufe 2 eine feste Drehzahl für den Antriebsmotor 11 und bei weiterem Hochschalten in die Schaltstufe 3 eine erhöhte Drehzahl eingeschaltet werden. Die Schaltstufe 2 gibt hier beispielsweise eine Wischzyklenzahl von 40 Wischvorgängen pro Minute und die Schaltstufe 3 eine Wischzyklenzahl von 55 Wischvorgängen pro Minute entsprechend den einschlägigen Vorschriften vor. Dabei liegt die maximale Drehzahl des Antriebsmotors 11 im regenmengenabhängigen Betrieb der Schaltstufe 1 höher als die Drehzahl in der Schaltstufe 3.

Um eine Änderung der durch die Kennlinie 19 vorgegebenen Wischcharakteristik entsprechend den Bedürfnissen des Fahrers zu ermöglichen, ist die Steuerschaltung 16 mit einer Algorithmus-Anpassungs-Steuerung ausgestattet, welche die Kennliniendaten bei Eingabe entsprechender Steuerbefehle dauerhaft verändert.

Hierzu wird der Wischerschalter 18 herangezogen und dabei ausgewertet, wenn der Fahrer die bei automatischem Wischerbetrieb in Schaltstufe 1 vorgegebenen Betriebsdaten durch Umschalten in die Schaltstufe 2 oder 3 verändert. Die daraus abgeleiteten Steuerbefehle werden in der Algorithmus-Anpassungs-Steuerung ausgewertet.

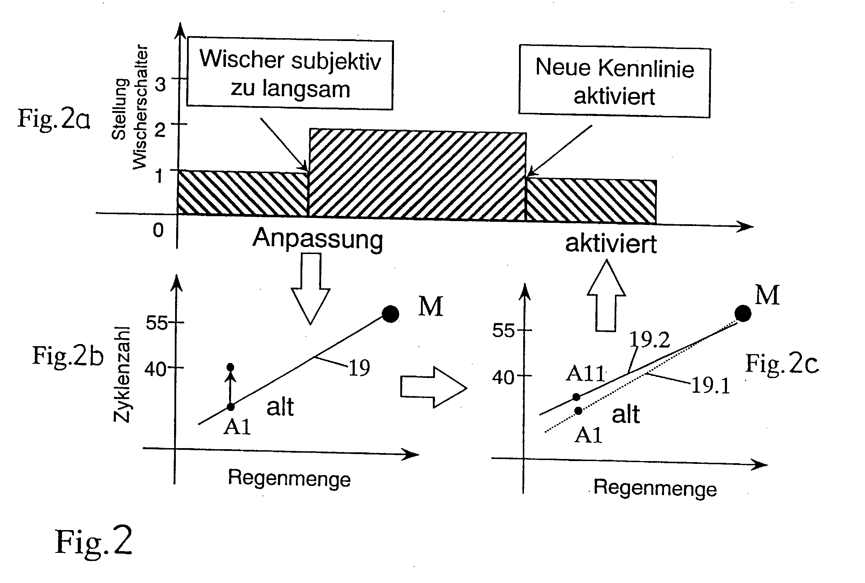

Wenn gemäß Figur 2a der Wischer 13 subjektiv zu langsam oder zu selten arbeitet, schaltet der Fahrer den Wischerschalter 18 auf Dauerbetrieb in Schaltstufe 2 oder 3. In Figur 2b ist dieser Umschaltvorgang für die Schaltstufe 2 ausgehend von der Kennlinie 19 für einen Arbeitspunkt A1 dargestellt. Das aus der Umschaltung abgeleitete Steuersignal bewirkt in der Algorithmus-Anpassungs-Steuerung gemäß Figur 2c eine Anhebung des Arbeitspunktes A1 in den neuen Arbeitspunkt A11 und zugleich die Neuberechnung von Betriebsdaten für eine gesamte neue Kennlinie 19.1 mit verminderter Steigung, aber gleichem Endpunkt M bei der größten zu erfassenden Regenmenge. Die Kennlinie 19 wird somit um den Drehpunkt M im Uhrzeigersinn verschwenkt, wobei die Anhebung vom Betriebspunkt A1 auf den Betriebspunkt A11 geringer ist, als der Absolutwert des Steuerbefehls zwischen dem Arbeitspunkt A1 und der Zyklenzahl je Zeiteinheit entsprechend der Schaltstufe 2. Dabei ist es möglich, daß bei einem direkten Hochschalten aus der Schaltstellung 1 in die Schaltstellung 3 die Anhebung des Arbeitspunkts um einen größeren Betrag erfolgt, als bei einer Umschaltung von Schaltstufe 1 nach Schaltstufe 2. Wenn danach der Wischerschalter wieder in die Schaltstufe 1 für automatischen Betrieb zurückgeschaltet wird, erfolgt die Steuerung des Antriebsmotors entsprechend der neuen Kennlinie 19.1 mit verkürzten Pausenzeiten im Intervallbetrieb bzw. erhöhter kontinuierlicher Wischzyklenzahl bei größeren Regenmengen. Diese Kennlinie bleibt solange erhalten, als keine Umschaltung in die Schaltstufen 2 oder 3 für erforderlich erachtet wird. Dabei werden bei einem Umschaltvorgang vorzugsweise die Betriebsdaten nicht um mehr als 50% verändert. Bewirkt eine Hochschaltung in die Schaltstufen 2 oder 3 nur mehr eine Änderung von weniger als 5%, wird eine weitere Kennlinienumrechnung zweckmäßigerweise nicht mehr durchgeführt. Dabei kann es auch zweckmäßig sein, eine veränderte Kennlinie nur dann als neue Kennlinie in die Steuerschaltung zu übernehmen, wenn die Rückschaltung der manuellen Steuermittel auf die kennliniengesteuerte erste Schaltstufe innerhalb eines vorgegebenen Zeitraumes erfolgt. Es kann aber auch zweckmäßig sein, in der Steuerschaltung mehrere voneinander unabhängige Kennlinien abrufbar abzulegen. Dabei kann es vorteilhaft sein, die einzelnen Kennlinien über die manuell betätigbaren Steuermittel, vorliegend durch den Wahlschalter abrufbar abzulegen.

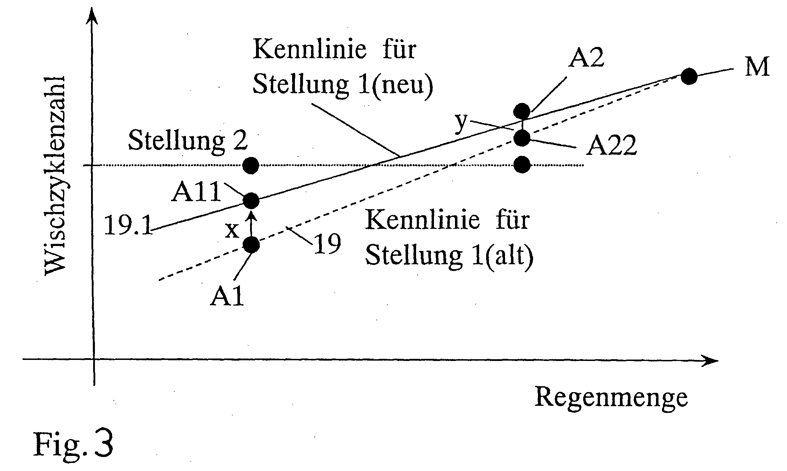

In Figur 3 ist die Änderung der Kennlinie vom Arbeitspunkt A1 zum Arbeitspunkt A11 nochmals dargestellt. Zusätzlich ist dort angezeigt, daß eine Vergrößerung der Neigung der aktuellen Kennlinie 19.1 beispielsweise auf die Neigung entsprechend der ursprünglichen Kennlinie 19 dann mittels Wischerschalter 18 möglich ist, wenn der regenmengengesteuerte Arbeitspunkt A2 Betriebsdaten vorgibt, die über den Betriebsdaten der in Stellung 2 vorgegebenen Werte liegt. Wird hierbei der Wischerschalter 18 demnach von der automatischen Schaltstufe 1 auf die Schaltstellung 2 mit der fest vorgegebenen Drehzahl geschaltet, ist das daraus abgeleitete Steuersignal negativ und gibt einen neuen Arbeitspunkt A22 vor, der vorliegend zufällig auf der ursprünglichen Kennlinie 19 liegt. Die Algorithmus-Anpassungs-Steuerung in der Steuerschaltung 16 generiert somit zu diesem Arbeitspunkt A22 die dann aktuelle Kennlinie 19, die Betriebsdaten für den Antriebsmotor 11 vorgibt, die eine verminderte Zyklenzahl pro Zeiteinheit bzw. im Intervallbetrieb eine Vergrößerung der Pausenzeit steuert. Die gleiche Funktion der Neigungsvergrößerung läßt sich auch dadurch herbeiführen, daß der Wischerschalter von der Regenautomatikstufe 1 bei noch eingeschalteter Zündung bzw. laufendem Fahrzeugantriebsmotor in die Null-Stellung geschaltet wird und der daraus gewonnene Steuerbefehl der Algorithmus-Anpassungs-Steuerung mitgeteilt wird.

Selbstverständlich ist es auch möglich, unabhängig vom Wischerschalter betätigbare Steuermittel zur Beeinflussung der Kennlinienneigung oder zur Auswahl einzelner unterschiedlicher Kennlinien vorzusehen, die vom Benutzer des Fahrzeugs oder von einer Kundendienststelle betätigt werden. Die Auswahl einer fahrerspezifischen Kennlinie kann dabei auch dann erfolgen, wenn die Fahrzeugsteuerung Memoryfunktionen für Sitzverstellung, Spiegeleinstellung oder eine Zündschlüsselcodierung verarbeitet. Mit dem Aufruf einer dieser fahrerabhängigen Funktionen kann die zugehörige Kennlinie für den Wischerbetrieb ausgewählt werden.

Eine vorteilhafte Weiterbildung ist, beim Umschalten des Lenkstockschalters in die Stufe AUS zu unterscheiden, ob der Benutzer tatsächlich nur den Scheibenwischer 13 ausschalten möchte, oder ob ihm die Intervallpausen zu kurz erscheinen, d.h. daß bei eine aktuellen, geringen Regenmenge größere Intervallpausenzeiten gefordert sind. Wird der Schalter ausgeschaltet, weil die Intervallpausenzeiten zu kurz erscheinen, dann ist eine Anpassung der Kennlinie 19 vorteilhaft, falls tatsächlich das Wischen beendet werden soll, ist eine Anpassung unnötig. Um diese beiden Fälle zu unterscheiden, wird nach dem Umschalten des Schalters auf die Stellung AUS für eine begrenzte Zeit, insbesondere höchstens 1 Minute, der Regensensor 15 weiterhin ausgelesen. Wird vom Regensensor 15 kein Regen mehr erkannt, dann wird angenommen, daß der Schalter tatsächlich ausgeschaltet wurde. Übersteigt die in der begrenzten Zeit gemessene Regenmenge einen vorgegebenen Schwellwert, so wird angenommen, daß die Intervallpausenzeit zu kurz war, und die Kennlinie 19 wird adaptiv nachgeführt.

Insgesamt ergibt sich somit eine Steuereinrichtung für den Antriebsmotor einer Scheibenwischereinrichtung, bei der eine regenmengenabhängige Kennlinie zur Steuerung des Antriebsmotors nachträglich veränderbar ist, wobei zur Eingabe von entsprechenden Steuerbefehlen manuell betätigbare Steuermittel genutzt werden. Diese Steuermittel können vorzugsweise durch den ohnehin vorhandenen mehrstufigen Wischerschalter des Fahrzeugs gebildet sein. Dabei wird in Bezug auf die aktuelle Kennlinie im momentan durch die ermittelte Regenmenge vorgegebenen Arbeitspunkt festgestellt, ob bei weiteren Schalthandlungen demgegenüber vom Nutzer eine höhere oder niedrigere Wischzyklenzahl angestrebt wird. Aus dieser Information wird dann eine entsprechende Änderung der Steigung bzw. des Verlaufs der Kennlinie abgeleitet.

## Patentansprüche

1. Steuereinrichtung für den Antriebsmotor (11) einer Scheibenwischereinrichtung eines Fahrzeugs, insbesondere eines Kraftfahrzeugs, mit einer Steuerschaltung (16), die mittels eines manuell zu betätigenden als Wischerschalter (18) ausgebildeten Steuermittels aktivierbar ist und die den Antriebsmotor (11) in einer Schaltstufe (1) des Wischerschalters (18) entsprechend einer Kennlinie (19) abhängig von einem Signal eines Regensensors (15) automatisch steuert,
**dadurch gekennzeichnet,**
**daß** die Steuerschaltung (16) die Kennlinie (19) bei einer Schaltmaßnahme des manuell betätigbaren Steuermittels (18) um einen oberen Endpunkt (M) verschwenkt.

2. Steuereinrichtung nach Anspruch 1,
**dadurch gekennzeichnet,**
**daß** der Wischerschalter (18) mehrere Schaltstufen (1, 2, 3) aufweist, wobei der ersten Schaltstufe (1) der automatische Kennlinienbetrieb und einer oder mehreren zusätzlichen Schaltstufe/n (2, 3) eine oder mehrere feste Drehzahl/en zugeordnet ist/sind, daß während des Scheibenwischerbetriebs in der Steuerschaltung (16) ein Anpassungsalgorithmus für die Erzeugung einer neuen Kennlinie (19.1) durchgeführt wird, wobei die Kennlinie (19, 19.1) einen festen oberen Endpunkt (M) aufweist, und die Steigung bzw. der Verlauf der Kennlinie (19) analog der Differenz der durch die Kennlinie (19) aktuell vorgegebenen Betriebsdaten zu den durch die zusätzliche/n Schaltstellung/en (0, 2, 3) vorgegebenen Betriebsdaten verändert wird, wenn eine zusätzliche Schaltstellung (0,2,3) manuell eingeschaltet wird.

3. Steuereinrichtung nach Anspruch 2,
**dadurch gekennzeichnet,**
**daß** die Steigung bzw. der Verlauf der Kennlinie (19) vermindert wird, wenn die von der aktuellen Kennlinie (19) vorgegebenen Betriebsdaten für den Antriebsmotor (11) niedriger als die durch die zusätzliche/n Schaltstufe/n (2, 3) vorgegebenen Betriebsdaten liegen und eine zusätzliche Schaltstellung (2, 3) manuell eingeschaltet wird.

4. Steuereinrichtung nach Anspruch 2 oder 3,
**dadurch gekennzeichnet,**
**daß** die Steigung bzw. der Verlauf der Kennlinie (19) erhöht wird, wenn die von der aktuellen Kennlinie (19.1) vorgegebenen Betriebsdaten für den Antriebsmotor (11) höher als die durch die zusätzliche/n Schaltstufe/n (0, 2, 3) vorgegebenen Betriebsdaten liegen und eine zusätzliche Schaltstellung (0, 2, 3) manuell eingeschaltet wird

5. Steuereinrichtung nach einem der Ansprüche 1-4,
**dadurch gekennzeichnet,**
**daß** die veränderte Kennlinie nur dann als neue Kennlinie in der Steuerschaltung (16) übernommen wird, wenn die Rückschaltung der manuellen Steuermittel (18) innerhalb eines vorgegebenen Zeitraumes auf die kennliniengesteuerte erste Schaltstufe (1) erfolgt.

6. Steuereinrichtung nach nach einem der Ansprüche 1-5,
**dadurch gekennzeichnet,**
**daß** die Änderung der von einer aktualisierten Kennlinie vorgegebenen Betriebsdaten von den Betriebsdaten der vorangegangenen Kennlinie auf nicht mehr als 50% begrenzt ist.

7. Steuereinrichtung nach nach einem der Ansprüche 1-6,
**dadurch gekennzeichnet,**
**daß** eine Aktualisierung der Kennlinie so lange erfolgt, bis die Abweichung der Betriebsdaten aus zwei aufeinanderfolgenden generierten Kennlinien geringer als 5% ist.

8. Steuereinrichtung nach Anspruch 1,
**dadurch gekennzeichnet,**
**daß** in der Steuereinrichtung (16) mehrere voneinander unabhängige Kennlinien abgelegt und aufrufbar sind.

9. Steuereinrichtung nach Anspruch 8,
**dadurch gekennzeichnet,**
**daß** die einzelnen Kennlinien über manuell betätigbare Wahlschalter in der Steuereinrichtung individuell zur Steuerung der Betriebsdaten des Antriebsmotors aktivierbar sind.

10. Verfahren zum Betreiben einer Steuereinrichtung nach Anspruch 1
**dadurch gekennzeichnet,**
**daß** zur Korrektur einer aktuellen Kennlinie (19) der Wischerschalter (18) aus der ersten kennlinienbetriebenen Schaltstufe (1) auf eine der zusätzlichen Schaltstufen (2, 3) umgeschaltet wird, daß in Abhängigkeit davon ein aktueller Kennlinienverlauf für die erste Schaltstufe (1) bestimmt und nach Zurückschalten des Wischerschalters (18) auf die kennlinienbetriebene Schaltstufe (1) der Antriebsmotor (11) der aktualisierten Kennlinie entsprechend gesteuert wird, wobei die kennlinie (19) um einen oberen Endpunkt (M) verschwenkt wird.

11. Verfahren zum Betreiben einer Steuereinrichtung nach Anspruch 10,
**dadurch gekennzeichnet,**
**daß** nach dem Ausschalten des Wischerschalters der Regensensor für eine begrenzte Zeit weiter ausgelesen wird.

12. Verfahren zum Betreiben einer Steuereinrichtung nach Anspruch 11,
**dadurch gekennzeichnet,**
**daß** die Kennlinie adaptiv nachgeführt wird, wenn der Regensensor innerhalb der begrenzten Zeit mindestens eine vorgegebene Regenmenge detektiert.

## Claims

1. Control device for the drive motor (11) of a windscreen wiper device of a vehicle, particularly a motor vehicle, with a control circuit (16) which is activatable by means of a control means, which is to be actuated manually and is constructed as a wiper switch (18), and which automatically controls the drive motor (11) in one switching stage (1) of the wiper switch (18) in correspondence with a characteristic curve (19) in dependence on a signal of a rain sensor (15), **characterised in that** the control circuit (16) pivots the characteristic curve (19) about an upper end point (M) in the case of a switching measure of the manually actuable control means (18).

2. Control device according to claim 1, **characterised in that** the wiper switch (18) has several switching stages (1, 2, 3), wherein one or more fixed rotational speeds is or are associated with the first switching stage (1) of the automatic operation by characteristic curve operation and one or more additional switching stages (2, 3), that during the windscreen wiper operation an adaptive algorithm for the generation of a new characteristic curve (19.1) is performed in the control circuit (16), wherein the characteristic curve (19, 19.1) has a fixed upper end point (M) and the slope or the course of the characteristic curve (19) is varied analogously to the difference of the operating data, which is actually predetermined by the characteristic curve (19), from the operating data, which is predetermined by the additional switching setting or settings (0, 2, 3), when an additional switch setting (0, 2, 3) is manually switched on.

3. Control device according to claim 2, **characterised in that** the slope or the course of the characteristic curve (19) is reduced when the operating data, which is predetermined by the actual characteristic curve (19), for the drive motor (11) is lower than the operating data predetermined by the additional switching stage or stages (2, 3) and an additional switch setting (2, 3) is manually switched on.

4. Control device according to claim 2 or 3, **characterised in that** the slope or the course of the characteristic curve (19) is increased when the operating data, which is predetermined by the actual characteristic curve (19.1), for the drive motor (11) is higher than the operating data predetermined by the additional switching stage or stages (0, 2, 3) and an additional switch setting (0, 2, 3) is manually switched on.

5. Control device according to one of claims 1 to 4, **characterised in that** the changed characteristic curve is taken over in the control circuit (16) as a new characteristic curve only when the switching back of the manual control means (18) to the first switching stage (1), which is controlled by characteristic curve, takes place within a predetermined time period.

6. Control device according to one of claims 1 to 5, **characterised in that** the change of the operating data, which is predetermined by an actualised characteristic curve, from the operating data of the preceding characteristic curve is limited to not more than 50%.

7. Control device according to one of claims 1 to 6, **characterised in that** an actualisation of the characteristic curve is carried out until the deviation of the operating data from two successively generated characteristic curves is less than 5%.

8. Control device according to claim 1, **characterised in that** several mutually independent characteristic curves are filed in the control device (16) and can be called up.

9. Control device according to claim 8, **characterised in that** the individual characteristic curves can be individually actuated by way of manually actuable selector switches in the control device for control of the operating data of the drive motor.

10. Method of operating a control device according to claim 1, **characterised in that** for correction of an actual characteristic curve (19) the wiper switch (18) is switched over from the first switching stage (1), which is operated by characteristic curve, to one of the additional switching stages (2, 3), and that in dependence thereon an actual characteristic curve course for the first switching stage (1) is determined and the actualised characteristic curve is correspondingly controlled after switching back of the wiper switch (18) to the switching stage (1) operated by characteristic curve, wherein the characteristic curve (19) is pivoted about an upper end point (17).

11. Method of operating a control device according to claim 10, **characterised in that** after the switching-off of the wiper switch the rain sensor is read out further for a limited time.

12. Method of operating a control device according to claim 11, **characterised in that** the characteristic curve is adaptively adjusted when the rain sensor detects at least a predetermined rain quantity within the limited time.

## Revendications

1. Dispositif de commande pour le moteur d'entraînement (11) d'un essuie-glace d'un véhicule, notamment d'un véhicule automobile, comportant un circuit de commande (16) qui peut être activé à l'aide d'un moyen de commande agencé sous la forme d'un commutateur d'essuie-glace (18) devant être actionné manuellement et qui commande automatiquement le moteur d'entraînement (11) dans un étage de commutation (1) du commutateur d'essuie-glace (18) conformément à une courbe caractéristique (19), en fonction d'un signal d'un détecteur de pluie (15),
**caractérisé en ce**
**que** le circuit de commande (16) fait pivoter la courbe caractéristique (19) autour d'un point d'extrémité supérieur (M) dans le cas d'une action de commutation de moyens de commande (18) pouvant être actionnés manuellement.

2. Dispositif de commande selon la revendication 1,
**caractérisé en ce**
**que** le commutateur d'essuie-glace (18) comporte plusieurs étages de commutation (1,2,3), le premier étage de commutation (1) étant associé au fonctionnement automatique sur la basee de la courbe caractéristique, et un ou plusieurs étages supplémentaires de commutation (2,3) étant associés à une ou plusieurs vitesses de rotation fixes, que pendant le fonctionnement de l'essuie-glace un algorithme d'adaptation pour la production d'une nouvelle courbe caractéristique (19.1) est exécuté dans le circuit de commande (16), la courbe caractéristique (19,19.1) possédant un point d'extrémité supérieur fixe (M), et la pente ou l'allure de la courbe caractéristique (19) est modifiée d'une manière analogue à la différence entre les données de fonctionnement prédéterminées actuellement par la courbe caractéristique (19), et les données de fonctionnement prédéterminées par la ou les positions de commutation (0,2,3), lorsqu'une position de commutation supplémentaire (0,2,3) est engagée manuellement.

3. Dispositif de commande selon la revendication 2,
**caractérisé en ce**
**que** la pente ou l'allure de la courbe caractéristique (19) est réduite lorsque les données de fonctionnement prédéterminées par la courbe caractéristique actuelle (19), pour le moteur d'entraînement (11), sont inférieures aux données de fonctionnement prédéterminées par le ou les étages de commutation supplémentaires (2,3), et qu'une position supplémentaire de commutation (2,3) est engagée manuellement.

4. Dispositif de commande selon la revendication 2 ou 3, **caractérisé en ce**
**que** la pente ou l'allure de la caractéristique (19) est accrue lorsque des données de fonctionnement prédéterminées par la courbe caractéristique actuelle (19.1), pour le moteur d'entraînement (11) sont supérieures aux données de fonctionnement prédéterminées par le ou les étages supplémentaires de commutation (0,2,3) et qu'une position supplémentaire de commutation (0,2,3) est engagée manuellement.

5. Dispositif de commande selon l'une des revendications 1 à 4, **caractérisé en ce qu'**une courbe caractéristique modifiée est alors transférée en tant que nouvelle courbe caractéristique dans le circuit de commande (16) lorsque la rétrogradation du moyen de commande manuelle (18) s'effectue pendant un intervalle de temps prédéterminé dans le premier étage de commutation (1) commandé par la courbe caractéristique.

6. Dispositif de commande selon l'une des revendications 1 à 5, **caractérisé en ce que** la modification des données de fonctionnement prédéterminées par une courbe caractéristique actualisée est limitée par les données de fonctionnement de la courbe caractéristique précédente, à pas plus de 50 %.

7. Dispositif de commande selon l'une des revendications 1 à 6, **caractérisé en ce qu'**une actualisation de la courbe caractéristique est exécutée jusqu'à ce que l'écart des données de fonctionnement provenant de deux courbes caractéristiques générées de manière à être successives est inférieur à 5 %.

8. Dispositif de commande selon la revendication 1, **caractérisé en ce que** plusieurs courbes caractéristiques indépendantes les unes des autres sont mémorisées et peuvent être appelées dans le dispositif de commande (16).

9. Dispositif de commande selon la revendication 8, **caractérisé en ce que** les différentes courbes caractéristiques peuvent être activées individuellement par l'intermédiaire de commutateurs de sélection pouvant être actionnés manuellement dans le dispositif de commande, pour la commande des données de fonctionnement du moteur d'entraînement.

10. Procédé pour faire fonctionner un dispositif de commande selon la revendication 1, **caractérisé en ce que** pour la correction d'une courbe caractéristique actuelle (19), le commutateur d'essuie-glace (18) est commuté du premier étage de commutation (1) fonctionnant sur la base d'une courbe caractéristique, sur l'un des étages de commutation supplémentaires (2,3), qu'en fonction de cela, une allure actuelle de courbe caractéristique est déterminée pour le premier étage de commutation (1) et qu'après le retour du commutateur d'essuie-glace (18) à l'étage de commutation (15) fonctionnant sur la base d'une courbe caractéristique, le moteur d'entraînement (11) est commandé en fonction de la courbe caractéristique actualisée, la courbe caractéristique (19) étant amenée à pivoter autour d'un point d'extrémité supérieur (M).

11. Procédé pour faire fonctionner un dispositif de commande selon la revendication 10, **caractérisé en ce qu'**après l'arrêt du commutateur d'essuie-glace, le détecteur de pluie continue à être lu pendant une durée limitée.

12. Procédé pour faire fonctionner un dispositif de commande selon la revendication 11, **caractérisé en ce que** la courbe caractéristique est asservie de façon adaptative lorsque le détecteur de pluie détecte au moins une quantité de pluie prédéterminée pendant un intervalle de temps limité.
